# EUROPÄISCHE PATENTSCHRIFT

(11) **EP 2 771 645 B1**
(45) Veröffentlichungstag und Bekanntmachung des Hinweises auf die Patenterteilung: **16.12.2015**
(21) Anmeldenummer: 12766680.8
(22) Anmeldetag: 02.10.2012
(51) Int. Cl.: G01B 21/16, G01M 17/00, G01D 3/02

(54) **VERFAHREN UND EINE VORRICHTUNG ZUM PARAMETRIEREN EINES SENSORS**
METHOD AND AN APPARATUS FOR PARAMETERIZING A SENSOR
PROCÉDÉ ET DISPOSITIF POUR LE PARAMÉTRAGE D'UN CAPTEUR

(30) Priorität: 27.10.2011 AT 15812011
(43) Veröffentlichungstag der Anmeldung: 03.09.2014
(73) Patentinhaber: AVL List GmbH, 8020 Graz (AT)
(72) Erfinder: PRILLER, Peter, 8111 Judendorf-Strassengel (AT); PAULWEBER, Michael, 8071 Hausmannstätten (AT); FELLEGGER, Rupert, 8020 Graz (AT)
(74) Vertreter: Patentanwälte Pinter & Weiss OG
(86) Internationale Anmeldenummer: PCT/EP2012/069443
(87) Internationale Veröffentlichungsnummer: WO 2013/060556

(56) Entgegenhaltungen:
- EP-A1- 1 048 933
- EP-A2- 1 217 477
- EP-A2- 2 148 177
- US-A1- 2006 082 363

## Beschreibung

Die gegenständliche Erfindung betrifft ein Verfahren und eine Vorrichtung zum Parametrieren eines Sensors, der auf einem Prüfling in einem Prüfstand angebracht ist.

In Prüfständen für Prüflinge, wie z.B. Verbrennungsmotoren, Antriebsstränge, Fahrzeuge, etc., werden in der Regel eine Fülle von Sensoren verbaut, um die für die aktuelle Prüfaufgabe notwendigen Daten erfassen zu können. Die Sensoren werden dazu an bestimmten Stellen des Prüflings angebracht und müssen vor einer Messung parametriert werden, um eine korrekte Messung sicherzustellen. Die Parametrierung umfasst dabei die Zuordnung der Sensorart zum Sensor, also die Zuordnung des Sensors zu dessen gemessenen physikalischen Größe und die Bestimmung der Position des Sensors am Prüfling, also die Messstelle, z.B. Öldruck Zylinderkopf links, oder Abgastemperatur vor Katalysator. Weiters kann die Parametrierung auch die Zuordnung des Sensortyps umfassen, z.B. Drucksensor Typ xyz oder Temperatursensor Typ xyz, um es dem Messsystem zu ermöglichen, die entsprechenden Übertragungsfunktion des Sensors anzuwenden und damit aus dem Messwert auf den am Sensor anliegenden physikalischen Wert rückschließen zu können. Ebenso kann die Parametrierung die Zuordnung der Sensor-Seriennummer oder einer Sensor-Identifikation oder notwendiger Kalibrierdaten umfassen. Diese Daten sind meistens in der Prüfstandsumgebung, z.B. am Prüfstandsrechner oder im Automatisierungssystem, abgelegt. Die Parametrierung erfolgt dabei manuell, d.h. dass ein Prüfstandsingenieur die Parametrierung der verschiedenen Sensoren einzeln vornehmen muss, also die erforderliche Information zuordnen muss, was aufgrund der Vielzahl von Sensoren und der Fülle von zuzuordnender Information eine aufwendige und fehleranfällige Aufgabe ist.

Dazu sind schon Verfahren bekannt geworden, die die Kalibrierung von Sensoren erleichtern. Die EP 1 300 657 A1 beschreibt z.B. ein Verfahren, bei dem die Kalibrierdaten eines Sensors mit diesem verknüpft sind, sodass die Kalibrierung semiautomatisch oder automatisch erfolgen kann. Dazu ist im Sensor eine Sensorkennung hinterlegt, mittels der Kalibrierdaten von einem externen Speicher aufgerufen werden können. Damit kann der Sensor zwar automatisch kalibriert werden, also für die Messung vorbereitet werden, nur ist damit noch nicht festgelegt, was dieser Sensor misst. Z.B. können an einem Verbrennungsmotor mehrere Drucksensoren, in der Regel auch vom gleichen Typ, verbaut sein. Die Drucksensoren können sich nun automatisch kalibrieren und liefern nun Messdaten an das Prüfstandsoftware. Nur ist damit noch nicht festgelegt, von welcher Stelle am Verbrennungsmotor die Messwerte kommen. Diese Zuordnung muss nachwievor manuell durch den Prüfstandsingenieur erfolgen.

Es ist daher eine Aufgabe der gegenständlichen Erfindung die Parametrierung eines Sensors gegenüber dem Stand der Technik zumindest zu erleichtern und zumindest eine teilweise automatische Parametrierung zu ermöglichen.

Diese Aufgabe wird mit einem Verfahren und einer Vorrichtung gelöst, bei dem der Sensor Information überträgt, die von einer Erfassungseinrichtung erfasst wird und daraus durch ein Lokalisierungsverfahren die Position des Sensors im Raum ermittelt wird, die ermittelte Sensorposition mit Geometriedaten des Prüflings verglichen wird und durch diesen Vergleich die Position des Sensors am Prüfling bestimmt wird und der Sensor anschließend parametriert wird, indem dem lokalisierten Sensor aufgrund der ermittelten Position am Prüfling die vom Sensor physikalisch gemessene Größe zugeordnet wird. Durch die selbsttätige Bestimmung der Sensorposition am Prüfling und der vom Sensor gemessenen physikalischen Größe, kann die Parametrierung bereits erheblich erleichtert werden. Dem Prüfstandsingenieur wird bereits ein parametrierter Sensor, in Form der Zuordnung der gemessenen physikalischen Größe zu einem Messort, vorgegeben, was die Zuordnung von Sensortyp und konkretem Sensor erheblich erleichtert, da nur mehr eine kleine Menge zur Auswahl übrig bleibt.

Falls eine automatische Zuordnung von Sensorposition und Sensorart wegen einer Mehrdeutigkeit in der ermittelten Position oder der ermittelten physikalischen Größe nicht möglich ist, wird vorteilhaft ein Vorschlag für eine manuelle Auswahl der richtigen Position oder physikalischen Größe angeboten. Damit kann der Prüfstandsingenieur sehr rasch die richtige Sensorart oder Sensorposition zuordnen, was die Parametrierung zumindest erleichtert.

Bevorzugt überträgt der Sensor als Information seine Sensorart, was es ermöglicht, die dem Sensor zugeordnete physikalische Größe der Sensorart zu entnehmen. Damit reicht es aus, die Position des Sensors am Prüfling zu bestimmen, da die Sensorart vom Sensor vorgegeben wird. Trotzdem könnte die Sensorart auch aus der Sensorposition ermittelt werden, die dann mit der übermittelten Sensorart verglichen werden könnte, was helfen kann mögliche Parametrierfehler zu vermeiden.

Wenn der Sensor als Information seinen Sensortyp überträgt und die Parametrierung die Zuordnung der physikalisch gemessenen Größe und/oder des Sensortyps zum lokalisierten Sensor umfasst, kann die Parametrierung großteils automatisiert ablaufen, was den Aufwand für die Parametrierung wesentlich verringert.

Ganz besonders vorteilhaft ist es, wenn der Sensor als Information eine eindeutige Sensorkennung überträgt und dem lokalisierten Sensor aufgrund der Sensorkennung die physikalisch gemessene Größe und/oder der Sensortyp und/oder Kalibrierdaten zugeordnet werden. Damit ist eine gänzlich automatisierte Parametrierung möglich, womit der Aufwand für die Parametrierung minimiert werden kann.

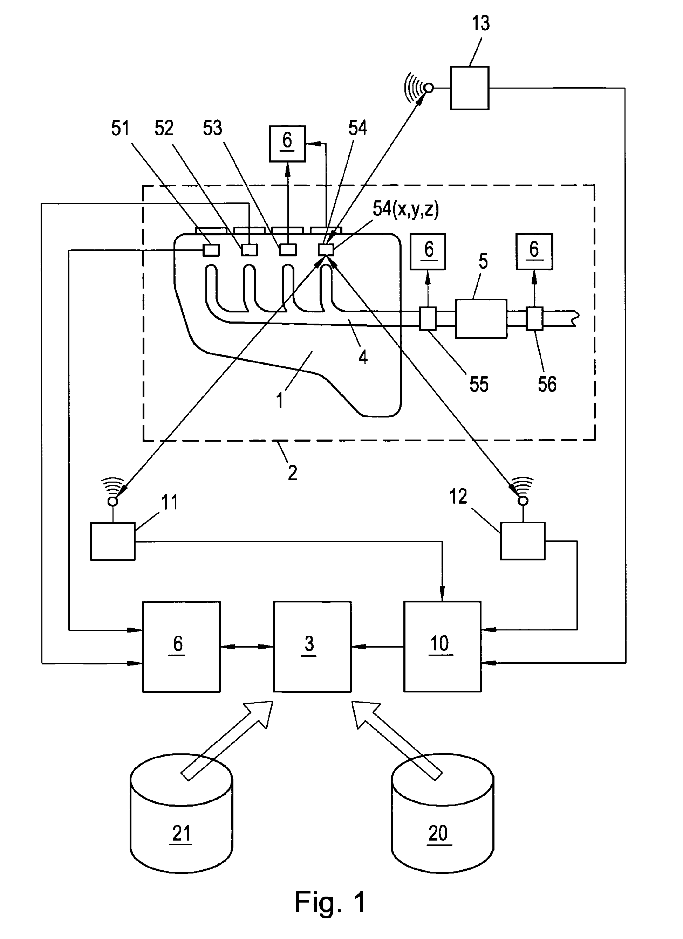

Die gegenständliche Erfindung wird unter Bezugnahme auf die Figuren 1, die beispielhaft, schematisch und nicht einschränkend eine bevorzugte Ausgestaltung der Erfindung zeigt, beschrieben. Dabei zeigt
Fig. 1 eine Anordnung zur erfindungsgemäßen Parametrierung.

In Fig. 1 ist ein Prüfling 1, hier ein Verbrennungsmotor mit Abgasstrang 4 und Katalysator 5, in einem nur angedeuteten Prüfstand 2 angeordnet. Solche Prüfstandsanordnungen sind hinlänglich bekannt, weshalb hier nicht auf die näheren Details dazu eingegangen wird. Neben einem Verbrennungsmotor kommen natürlich auch noch andere Prüflinge 1, wie z.B. ein Antriebsstrang, ein Getriebe, ein Fahrzeug, etc., in Frage. Am Prüfling 1 sind, wie in einem Prüfstand 2 üblich, eine Reihe von Sensoren 51, 52, 53, 54, 55, 56 verbaut. Die Sensoren 51, 52, 53, 54, 55, 56 liefern ihre Messwerte, über ein Kabel oder kabellos, an ein Automatisierungssystem 6, das den Prüfstand 2, den Prüfling 1 und den Prüflauf überwacht und steuert, sowie das Prüflaufergebnis auswertet. Für den Einsatz der Sensoren 51, 52, 53, 54, 55, 56 müssen diese vorab parametriert werden, damit die Messwerte der Sensoren 51, 52, 53, 54, 55, 56 in korrekte physikalische Größen umgesetzt werden können. Dem Automatisierungssystem 6 muss somit zumindest bekannt sein, von wo am Prüfling ein Messwert herrührt und was der dort befindliche Sensor 51, 52, 53, 54, 55, 56 misst. Das muss dem Automatisierungssystem 6 vor dem Start des Prüflaufes bekannt gegeben werden.

Dazu ist eine Lokalisierungseinheit 10 vorgesehen, das mit einem geeigneten Lokalisierungsverfahren zuerst die Position eines Sensors 51, 52, 53, 54, 55, 56 bestimmt. Solche Lokalisierungsverfahren sind an sich hinlänglich bekannt und es kann ein für die Erfindung beliebiges geeignetes Verfahren verwendet werden, wie z.B. Triangulation, Trilateration, Distanzmessung mit elektromagnetischen Wellen (z.B. Mikrowellen) oder Schallwellen (z.B. Ultraschall), auf Dopplereffekt basierten Methoden, Lasermessung, Bilderkennung, etc. Diese Lokalisierungsverfahren nutzen von Sensoren (aktiv oder passiv) übermittelte Information, um daraus gemäß dem angewandten Verfahren eine Position zu bestimmen. Die Information wird dabei von einer Erfassungseinrichtung erfasst und ausgewertet. Die Übertragung von Information vom Sensor 51, 52, 53, 54, 55, 56 kann dabei aktiv, z.B. durch eine codierte Übermittlung einer Nachricht, oder passiv, z.B. ein Tag am Sensor, dass durch optische Methoden gelesen oder anvisiert werden kann, erfolgen. Z.B. werden bei der Triangulation die Winkel eines Referenzpunktes zum Messort ermittelt und daraus die Position des Messortes im Raum. Bei der Trilateration werden die Entfernungen einer Referenzposition zum Messort ermittelt. Dabei kann eine passive, z.B. optische, oder eine aktive, z.B. funktechnisch, Winkel- oder Entfernungsmessung zum Einsatz kommen. Bei einer Lasermessung wird ein Messort durch einen Laserstrahl anvisiert und der reflektierte Laserstrahl erfasst und ausgewertet, z.B. hinsichtlich der Phase oder der Laufzeit.

Das wird in Fig. 1 am Beispiel eines auf Ultraschall basierenden Lokalisierungsverfahren dargestellt. Dazu sind hier als Erfassungseinrichtung drei Ultraschall-Wandler 11, 12, 13 angeordnet, wobei auch mehr Wandler vorgesehen sein können. Die einzelnen Sensoren 51, 52, 53, 54, 55, 56 senden nun nacheinander ein Ultraschallsignal aus, z.B. eine codierte festgelegte Nachricht. Zur Datenübertragung kann grundsätzlich jedes beliebige Übertragungsprotokoll und jedes beliebige geeignete Datenformat verwendet werden. Aufgrund einer Laufzeitmessung kann die Distanz zwischen Sensor 54 und den einzelnen UltraschallWandlern 11, 12, 13 und damit die Lage des Sensors 54 im Raum bezogen auf die Ultraschall-Wandler 11, 12, 13 oder einer anderen beliebigen Referenzposition ermittelt werden. Die Lokalisierungseinheit 10 sendet die ermittelte Sensorposition 54(x,y,z) an eine Parametriereinheit 3. Die Parametriereinheit 3 kann z.B. wie hier eine eigenständige Einheit in der Prüfstandsumgebung sein, kann aber auch im Automatisierungssystem 6 des Prüfstandes 2 oder in der Lokalisierungseinheit 10 integriert sein.

In einer Geometriedatenbank 20 sind Geometriedaten für den Prüfling 1 abgelegt, auf die die Parametriereinheit 3 zugreifen kann. Als Geometriedaten kommen dabei alle Daten in Frage, die den Prüfling 1 in Form von Raumpunkten oder Bauteilen mit deren Lage im Raum beschreiben, z.B. 3D-CAD-Daten aus einer Konstruktionsumgebung. Jeder Bauteil des Prüflings 2 ist dabei durch seine dreidimensionale Ausdehnung bestimmt und bekannt. Durch Vergleich der ermittelten Sensorposition 54(x,y,z) mit den Geometriedaten in der Parametriereinheit 3 kann die Lage des Sensors 54 am Prüfling 1 bzw. die Anordnung des Sensors 54 an einem bestimmten Bauteil des Prüflings 1 ermittelt werden, wodurch der Kontext zwischen Position und Sensor hergestellt werden kann.

Dazu können bereits bei der Konstruktion des Prüflings mögliche Einbauorte für Sensoren definiert und in den Konstruktionsdaten (z.B. CAD Daten) hinterlegt werden. Das könnte natürlich auch im Nachhinein zu bereits bestehenden Konstruktionsdaten gemacht werden. Zum Beispiel könnte bei Position (x,y,z) eine Bohrung definiert sein, zusammen mit beschreibenden Daten wie "Messstelle Temperatursensor" oder noch konkreter gleich mit einem zugehörige Normnamen, z.B. Messstelle "T_EX_C01". Damit ist die Zuordnung der Position zur Messaufgabe (also zur gemessenen physikalischen Größe) klar und einfach. Allerdings müssen dabei die Konstruktionsdaten entsprechend aufbereitet und angereichert werden, was jedoch nur einmal erfolgen müsste.

Alternativ könnten die Konstruktionsdaten (z.B. CAD Daten) eine Bauteilliste beinhalten. Aus der Bauteilliste selbst oder aus zusätzlichen beschreibenden Text oder zusätzlichen Tags zu jedem Bauteil kann dann z.B. mit Hilfe einer vorgegebenen Wortliste, die die möglichen Bauteile beinhaltet, durch Wortvergleich der Bauteil ermittelt werden.

Weiters könnten auch ganz allgemein Heuristiken definiert werden, woraus dann die wahrscheinlichste Lage des Sensors bestimmt werden kann. Dazu könnten auch zusätzlich analog zur Lokalisierung der Sensoren zusätzliche Referenzpunkte am Prüfling vermessen werden, um die Lokalisierung des Sensors zu unterstützen. Die zusätzlichen Referenzpunkte können Messort-Positionen (z.B. Ölwanne, Abgasstrang, Zylinderkopf, etc.) für typische Prüflingskonfigurationen relativ zu diesen Referenzpunkten beschreiben. Solche auf Heuristiken basierten Regeln könnten z.B. etwa der Art "Ölwanne ist unten", "Abgasstrang ist seitlich", "Zylinderkopf ist oberhalb von Ölwanne", etc. definiert sein. Natürlich könnten auch Methoden der künstlichen Intelligenz, wie z.B. neuronale Netzwerk, oder Expertensysteme zur Anwendung kommen.

Selbstverständlich kann dieser Vergleich auch im Lokalisierungssystem 10 durchgeführt werden. Auf diese Weise kann jeder Sensor 51, 52, 53, 54, 55, 56 zumindest einem Bauteil bzw. einer räumlichen Position zugeordnet werden. Aus der zugeordneten Position kann dann ein Rückschluss auf die Sensorart gemacht werden. In vielen Fällen ist dadurch eine eindeutige Ermittlung der Sensorart möglich. Z.B. kann bei der Ermittlung der Sensorposition "Abgas-Auslass; Zylinder 1" geschlossen werden, dass es sich um einen Temperatursensor handeln muss, da an diesem Bauteil kein anderer Sensor sinnvoll einsetzbar ist. In weiterer Folge kann auch die Messgröße "Temperatur Port Zylinder 1" und sogar der zuzuordnende Normname dafür automatisch vergeben werden, hier z.B. T_EX_C01.Diese Information, also welche Sensoren für welchen Bauteil bzw. für welche räumliche Position möglich sind, kann in der Parametriereinheit 3 oder in einer Sensordatenbank 21 oder an einem anderen geeigneten Speicherort hinterlegt sein.

An anderen Bauteilen des Prüflings wird nur eine mehrdeutige Zuordnung der Sensorposition zur Sensorart möglich sein. Z.B. können im Ölkanal eines Motors Temperatursensoren und Drucksensoren direkt nebeneinander angeordnet sein. Bei der Ermittlung der Position "im Ölkanal" kann zumindest eine eingeschränkte Auswahl (hier Temperatur und Druck) angeboten werden, die dann manuell vom Prüfstandsingenieur richtig zugeordnet werden kann, womit die Parametrierung zumindest erheblich erleichtert wird.

Falls keine eindeutige Ermittlung eines Bauteils oder einer Position des Sensors 54 am Prüfling möglich ist, kann dem Prüfstandsingenieur auch eine Auswahl von möglichen Bauteilen oder Positionen zur manuellen Wahl angeboten werden, was die Parametrierung zumindest erleichtert.

Somit können die Sensoren 51, 52, 53, 54, 55, 56 alleine aus der automatisch ermittelten Position zumindest teilweise automatisch parametriert werden. In diesem Fall umfasst die automatische Parametrierung nur die Bestimmung der Position des Sensors 51, 52, 53, 54, 55, 56 und daraus dessen gemessener physikalischer Größe (also die Sensorart). Die weiterführende Zuordnung des konkret verbauten Sensors, also z.B. Sensortyp und Kalibrierdaten, zur ermittelten Position kann dann manuell erfolgen.

In einer verbesserten Ausgestaltung sendet ein Sensor 51, 52, 53, 54, 55, 56 nicht nur eine neutrale codierte Nachricht, sondern auch die Art des Sensors 51, 52, 53, 54, 55, 56, also die Art der gemessenen physikalischen Größe, wie z.B. Druck, Temperatur, Sauerstoffkonzentration, etc. Die Sensorart kann dabei z.B. einfach in Form einer Zusatzinformation, wie z.B. "1" für Temperatur, "2" für Druck, etc. übertragen werden. Damit kann automatisiert eine eindeutige Zuordnung von Sensorart zur ermittelten Position durchgeführt werden, auch in Fällen, in denen die Position eine Mehrdeutigkeit hinsichtlich des verbauten Sensors zulässt. Dadurch kann mittels der automatisierten Parametrierung jeder Sensor durch seine Position und der übermittelten Sensorart charakterisiert werden, also z.B. Temperatursensor an der Ölwanne, Sauerstoffsensor vor Katalysator, Temperatursensor nach Katalysator, Drucksensor am x-ten Zylinder, etc.

Die Sensorart muss dabei nicht mehr aus der ermittelten Position des Sensors 54 am Prüfling abgeleitet werden, sondern kann der vom Sensor 54 übertragenen Information direkt entnommen werden. Trotzdem kann die Sensorart auch aus der Sensorposition ermittelt werden, z.B. um durch Redundanz einen Plausibilitätsvergleich vornehmen zu können, um Fehler in der Parametrierung zu vermeiden, oder um eine Parametrierung auch dann zu ermöglichen, wenn die Sensorart aus irgendeinem Grund nicht oder nicht korrekt ausgewertet werden kann.

In einer weiterführenden Ausgestaltung übermittelt der Sensor 51, 52, 53, 54, 55, 56 noch Sensortyp, z.B. Temperatursensor PT100, Drucksensor 0..1000mBar, etc., womit der Sensor 51, 52, 53, 54, 55, 56 nach der automatischen Parametrierung grundsätzlich schon einsatzbereit ist, also der Messwert in einen korrekten physikalischen Wert umgewandelt werden kann. Der Sensortyp kann codiert z.B. in Form eines Zusatzfeldes in der vom Sensor ausgesandten Nachricht übermittelt werden. Der Sensortyp kann dabei zusätzlich zur Sensorart übertragen werden. Die Sensorart kann aber auch aus dem Sensortyp abgeleitet werden, womit die Übertragung der Sensorart auch entfallen kann.

In einer bevorzugten Ausführung liefert ein Sensor 51, 52, 53, 54, 55, 56 aber seine eindeutige Identifikation, sodass die Parametrierung auch die Zuordnung von für jeden Sensor vorhandenen Kalibrierdaten umfassen kann. Dazu kann eine Sensordatenbank 21 vorgesehen sein, in der für jeden Sensor 51, 52, 53, 54, 55, 56 entsprechende Daten, wie z.B. Kalibrierdaten, hinterlegt und über die Sensorkennung abrufbar sind. Für eine fehlerfreie und zuverlässige Messung ist die Kalibrierung des Sensors 51, 52, 53, 54, 55, 56 vorteilhaft. Dazu gibt es auch entsprechende Standards für die Spezifizierung der Sensorkennung, wie z.B. den TEDS-Standard (gemäß IEEE 1451.4 Transducer Electronic Data Sheet). Die Sensorkennung ermöglicht bevorzugt eine eindeutige Identifizierung des Sensors 54, z.B. über eine Sensorseriennummer. In diesem Fall kann die Sensorart und der Sensortyp auch durch die übermittelte Sensorkennung aus der Sensordatenbank 21 abgefragt werden und muss nicht eigens von Sensor 54 mit übertragen werden.

Die Lokalisierung des Sensors 51, 52, 53, 54, 55, 56 kann auch mit Methoden der digitalen Bilderkennung erfolgen. Dazu können die Sensoren z.B. mit geeigneten Bildmarken, wie z.B. einer Kennzeichnung für die Art des Sensors oder einer eindeutigen Sensorkennung, versehen sein, die durch die Bilderkennung ausgewertet werden können. Damit kann wieder zumindest die Position des Sensors 51, 52, 53, 54, 55, 56 und (zumindest teilweise automatisch) die Sensorart ermittelt werden. Wenn am Sensor zusätzlich auch noch der Sensortyp oder gar eine eindeutige Sensorkennung, die eine eindeutige Identifikation ermöglicht, angebracht ist, die von der Bilderkennung ausgewertet werden kann, kann die Parametrierung wie oben beschrieben automatisiert auch weiterführende Information zuordnen.

Eine weitere Alternative ist die Verwendung bewegter Antennen, die die Anwendung des Dopplereffekts ermöglichen. Damit kann die Positionsbestimmung des Sensors 51, 52, 53, 54, 55, 56 genauer gemacht werden und es können unter Umständen auch Sensoren erfasst werden, die durch feststehende Antennen oder Wandler nicht erreichbar wären.

Ebenso kann vorgesehen sein eine redundante Anzahl von Antennen, Wandlern, Bildaufnahmeeinrichtungen, Lasern, etc. zu verwenden. Damit kann die Position eines Sensors 51, 52, 53, 54, 55, 56 anhand unterschiedlicher Antennen, Wandlern, Bildaufnahmeeinrichtungen, Lasern, etc. ermittelt werden, also mehrfach ermittelt werden. Eine Durchschnittsbestimmung oder die Anwendung von Wahrscheinlichkeitsüberlegungen (Ermittlung der höchsten Wahrscheinlichkeit für die Position eines Sensors) kann wiederum zu einer erhöhten Genauigkeit führen. Das kann auch in den Fällen helfen, in denen ein Sensor 51, 52, 53, 54, 55, 56 so angeordnet ist, dass die ausgestrahlten Wellen nicht von allen Antennen, Wandlern, Bildaufnahmeeinrichtungen, etc. erfasst werden können, z.B. aufgrund der geometrischen Gegebenheiten des Prüflings 1.

## Patentansprüche

1. Verfahren zum Parametrieren eines Sensors (54), der auf einem Prüfling (1) in einem Prüfstand (2) angebracht ist, **dadurch gekennzeichnet, dass** der Sensor (54) Information überträgt, die von einer Erfassungseinrichtung erfasst wird und daraus durch ein Lokalisierungsverfahren die Position (54(x,y,z)) des Sensors (54) im Raum ermittelt wird, die ermittelte Sensorposition (54(x,y,z)) mit Geometriedaten des Prüflings (1) verglichen wird und durch diesen Vergleich die Position des Sensors (54) am Prüfling (1) bestimmt wird und der Sensor (54) anschließend parametriert wird, indem dem lokalisierten Sensor (54) aufgrund der ermittelten Position (54(x,y,z)) am Prüfling (1) die vom Sensor (54) physikalisch gemessene Größe zugeordnet wird.

2. Verfahren nach Anspruch 1, **dadurch gekennzeichnet, dass** bei einer Mehrdeutigkeit in der ermittelten Position (54(x,y,z)) oder der ermittelten physikalischen Größe ein Vorschlag für eine manuelle Auswahl der richtigen Position oder physikalischen Größe angeboten wird.

3. Verfahren nach Anspruch 1 oder 2, **dadurch gekennzeichnet, dass** der Sensor (54) als Information seine Sensorart überträgt und die dem Sensor (54) zugeordnete physikalische Größe der Sensorart entnommen wird.

4. Verfahren nach Anspruch 1 oder 2, **dadurch gekennzeichnet, dass** der Sensor (54) als Information seinen Sensortyp überträgt und die Parametrierung die Zuordnung der physikalisch gemessenen Größe und/oder des Sensortyps zum lokalisierten Sensor (54) umfasst.

5. Verfahren nach Anspruch 1 oder 2, **dadurch gekennzeichnet, dass** der Sensor (54) als Information eine eindeutige Sensorkennung überträgt und dem lokalisierten Sensor (54) aufgrund der Sensorkennung die physikalisch gemessene Größe und/oder der Sensortyp und/oder Kalibrierdaten zugeordnet werden.

6. Vorrichtung zum Parametrieren eines Sensors (54), der auf einem Prüfling (1) in einem Prüfstand (2) angebracht ist, **dadurch gekennzeichnet, dass** eine Erfassungseinrichtung vorgesehen ist, mit der vom Sensor (54) übertragene Information erfassbar und an eine Lokalisierungseinheit (10) übermittelbar ist, die Lokalisierungseinheit (10) daraus durch ein Lokalisierungsverfahren die Position (54(x,y,z)) des Sensors (54) im Raum ermittelt, **dass** eine Parametriereinheit (3) vorgesehen ist, in der die ermittelte Sensorposition (54(x,y,z)) mit Geometriedaten des Prüflings (1) vergleichbar ist und durch diesen Vergleich die Position (54(x,y,z)) des Sensors (54) am Prüfling (1) bestimmbar ist **und dass** der Sensor (54) durch die Parametriereinheit (3) anschließend parametrierbar ist, indem dem lokalisierten Sensor (54) aufgrund der ermittelten Position am Prüfling (1) die vom Sensor (54) physikalisch gemessene Größe zuordenbar ist.

7. Vorrichtung nach Anspruch 6, **dadurch gekennzeichnet, dass** die Lokalisiereinheit (10) oder die Parametriereinheit (3) eingerichtet ist, um bei einer Mehrdeutigkeit in der ermittelten Position (54(x,y,z)) oder der ermittelten physikalischen Größe einen Vorschlag für eine manuelle Auswahl der richtigen Position oder physikalischen Größe anzubieten.

8. Vorrichtung nach Anspruch 6 oder 7, **dadurch gekennzeichnet, dass** die Lokalisiereinheit (10) oder Parametriereinheit (3) eingerichtet ist, um eine vom Sensor (54) übertragene Sensorart und daraus die dem Sensor (54) zugeordnete physikalische Größe zu ermitteln und dem Sensor (54) zuzuordnen.

9. Vorrichtung nach Anspruch 6 oder 7, **dadurch gekennzeichnet, dass** die Lokalisiereinheit (10) oder Parametriereinheit (3) eingerichtet **ist,** um einen vom Sensor (54) übertragene Sensortyp und daraus die dem Sensor (54) zugeordnete physikalische Größe zu ermitteln und die ermittelte physikalische Größe und/oder den Sensortyp dem Sensor (54) zuzuordnen.

10. Vorrichtung nach Anspruch 6 oder 7, **dadurch gekennzeichnet, dass** die Lokalisiereinheit (10) oder Parametriereinheit (3) eingerichtet ist, um eine vom Sensor (54) übertragene Sensorkennung und daraus den dem Sensor (54) zugeordnete Sensortyp und die dem Sensor (54) zugeordnete physikalische Größe zu ermitteln und der ermittelte Sensortyp und/oder die ermittelte physikalische Größe und/oder Kalibrierdaten dem Sensor (54) zuzuordnen.

## Claims

1. A method for parameterizing a sensor (54) that is fitted on an object under test (1) on a test bench (2), **characterized in that** the sensor transmits information that is recorded by a recording device and therefrom, the spatial position (54(x,y,z)) of the sensor (54) is ascertained through a localization method, the ascertained sensor position (54(x,y,z)) is compared with geometric data of the object under test (1), and through this comparison, the position of the sensor (54) on the object under test (1) is determined, and subsequently, the sensor (54) is parameterized **in that** based on the ascertained position (54(x,y,z)) on the object under test (1), the variable physically measured by the sensor (54) is assigned to the localized sensor (54).

2. The method according to claim 1, **characterized in that** in the case of ambiguity in the determined position (54(x,y,z)) or in the ascertained physical variable, a proposal for a manual selection of the correct position or physical variable is offered.

3. The method according to claim 1 or claim 2, **characterized in that** the sensor (54) transmits as information its sensor kind, and the physical variable assigned to the sensor (54) is derived from the sensor kind.

4. The method according to claim 1 or claim 2, **characterized in that** the sensor (54) transmits as information its sensor type, and parameterizing comprises the assignment of the physically measured variable and/or the sensor type to the localized sensor (54).

5. The method according to claim 1 or claim 2, **characterized in that** the sensor (54) transmits as information a unique sensor identifier, and based on said sensor identifier, the physically measured variable and/or the sensor type and/or calibration data are assigned to the localized sensor (54).

6. An apparatus for parameterizing a sensor (54) that is fitted on an object under test (1) on a test bench (2), **characterized in that** a recording device is provided by means of which information transmitted by the sensor (54) can be recorded and can be transmitted to a localization unit (10), and therefrom, the localization unit (10) ascertains through a localization method the spatial position (54(x,y,z)) of the sensor (54), **that** a parameterization unit (3) is provided in which the ascertained sensor position (54(x,y,z)) can be compared with geometric data of the object under test (1), and through this comparison, the position (54(x,y,z)) of the sensor on the object under test (1) can be determined, **and that** subsequently, the sensor (54) can be parameterized by the parameterization unit (3) **in that** based on the ascertained position on the object under test (1), the variable physically measured by the sensor (54) can be assigned to the localized sensor (54).

7. The apparatus according to claim 6, **characterized in that** the localization unit (10) or the parameterization unit (3) is adapted for offering a proposal for manual selection of the correct position or physical variable if there is ambiguity in the determined position (54(x,y,z)) or the determined physical variable.

8. The apparatus according to claim 6 or claim 7, **characterized in that** the localization unit (10) or the parameterizing unit (3) is adapted for ascertaining a sensor kind transmitted by the sensor (54), and for ascertaining therefrom the physical variable assigned to the sensor (54) and assigning it to the sensor (54).

9. The apparatus according to claim 6 or claim 7, **characterized in that** the localization unit (10) or the parameterization unit (3) is adapted for ascertaining a sensor type transmitted by the sensor (54) and for ascertaining therefrom the physical variable assigned to the sensor (54), and for assigning the ascertained physical variable and/or the sensor type to the sensor (54).

10. The apparatus according to claim 6 or claim 7, **characterized in that** the localization unit (10) or the parameterization unit (3) is adapted for ascertaining a sensor identifier transmitted by the sensor (54) and for ascertaining therefrom the sensor type assigned to the sensor (54) and for ascertaining the physical variable assigned to the sensor (54), and for assigning the ascertained sensor type and/or the ascertained physical variable and/or calibration data to the sensor (54).

## Revendications

1. Procédé de paramétrage d'un capteur (54) fixé sur un échantillon (1) dans un banc d'essai (2), **caractérisé en ce que** le capteur (54) transmet une information détectée par un dispositif de détection et **en ce que** la position (54(x,y,z)) du capteur (54) dans l'espace est déterminée par un procédé de localisation, la position de capteur (54(x,y,z)) déterminée étant comparée avec des données géométriques de l'échantillon (1) et la position du capteur (54) sur l'échantillon (1) étant déterminée par cette comparaison, et le capteur (54) étant ensuite paramétré en attribuant au capteur localisé (54) une grandeur mesurée physiquement par le capteur (54), sur la base de la position (54(x,y,z)) déterminée sur l'échantillon (1).

2. Procédé selon la revendication 1 ou 2, **caractérisé en ce qu'**en cas d'ambiguïté dans la position déterminée (54(x,y,z)) ou dans la grandeur physique déterminée, il est proposé un choix manuel de la position correcte ou de la grandeur proposée.

3. Procédé selon la revendication 1 ou 2, **caractérisé en ce que** le capteur (54) transmet son type de capteur en tant qu'information, et la grandeur physique attribuée au capteur (54) est déduite du type de capteur.

4. Procédé selon la revendication 1 ou 2, **caractérisé en ce que** le capteur (54) transmet son type de capteur en tant qu'information, et le paramétrage comprend l'attribution de la grandeur mesurée physiquement et/ou du type de capteur au capteur (54) localisé.

5. Procédé selon la revendication 1 ou 2, **caractérisé en ce que** le capteur (54) transmet un identifiant de capteur univoque en tant qu'information, et la grandeur mesurée physiquement et/ou le type de capteur et/ou des données d'étalonnage sont attribuées au capteur (54) localisé, sur la base de l'identifiant de capteur.

6. Dispositif de paramétrage d'un capteur (54) fixé sur un échantillon (1) dans un banc d'essai (2), **caractérisé en ce qu'**il est prévu un dispositif de détection permettant de détecter une information transmise par le capteur (54) et de transmettre celle-ci à une unité de localisation (10), l'unité de localisation (10) déterminant ainsi la position (54(x,y,z)) du capteur (54) dans l'espace par un procédé de localisation, **en ce qu'**il est prévu une unité de paramétrage (3) dans laquelle la position de capteur (54(x,y,z)) déterminée peut être comparée avec des données géométriques de l'échantillon (1), la position (54(x,y,z)) du capteur (54) sur l'échantillon (1) pouvant être déterminée par cette comparaison, et **en ce que** le capteur (54) peut ensuite être paramétré par l'unité de paramétrage (3), par attribution au capteur (54) localisé de la grandeur mesurée physiquement par le capteur (54), sur la base de la position déterminée sur l'échantillon (1).

7. Dispositif selon la revendication 6, **caractérisé en ce que** l'unité de localisation (10) ou l'unité de paramétrage (3) est configurée pour proposer un choix manuel de la position correcte ou de la grandeur physique, en cas d'ambiguïté dans la position (54(x,y,z)) déterminée ou dans la grandeur déterminée physiquement.

8. Dispositif selon la revendication 6 ou 7, **caractérisé en ce que** l'unité de localisation (10) ou l'unité de paramétrage (3) est configurée pour déterminer un type de capteur transmis par le capteur (54) ainsi que la grandeur physique ainsi attribuée au capteur (54), et pour les attribuer au capteur (54).

9. Dispositif selon la revendication 6 ou 7, **caractérisé en ce que** l'unité de localisation (10) ou l'unité de paramétrage (3) est configurée pour déterminer un type de capteur transmis par le capteur (54) ainsi que la grandeur physique ainsi attribuée au capteur (54), et pour attribuer la grandeur physique déterminée et/ou le type de capteur au capteur (54).

10. Dispositif selon la revendication 6 ou 7, **caractérisé en ce que** l'unité de localisation (10) ou l'unité de paramétrage (3) est configurée pour déterminer un identifiant de capteur transmis par le capteur (54) ainsi que le type de capteur attribué au capteur (54) et la grandeur physique attribuée au capteur (54), et pour attribuer le type de capteur déterminé et/ou la grandeur physique déterminée et/ou des données d'étalonnage au capteur (54).
